# EUROPÄISCHE PATENTSCHRIFT

(11) **EP 3 068 270 B1**
(45) Veröffentlichungstag und Bekanntmachung des Hinweises auf die Patenterteilung: **02.01.2019**
(21) Anmeldenummer: 14827156.2
(22) Anmeldetag: 14.11.2014
(51) Int. Cl.: A47J 17/02, A47J 43/25, A47G 21/00

(54) **VERFAHREN ZUM SCHNEIDEN VON OBST, GEMÜSE ODER DERGLEICHEN, SCHNEIDWERKZEUG**
METHOD FOR CUTTING FRUIT, VEGETABLES OR SIMILAR, CUTTING TOOL
PROCÉDÉ DE DÉCOUPE DE FRUITS, LÉGUMES OU SIMILAIRES, OUTIL DE COUPE

(30) Priorität: 16.11.2013 DE 102013019078; 05.02.2014 DE 202014000963 U
(43) Veröffentlichungstag der Anmeldung: 21.09.2016
(73) Patentinhaber: Börner Distribution International GmbH, 54626 Landscheid-Niederkail (DE)
(72) Erfinder: ELSEN, Wolfgang Klaus, 54662 Speicher (DE)
(74) Vertreter: Westphal, Mussgnug & Partner Patentanwälte mbB
(86) Internationale Anmeldenummer: PCT/DE2014/000584
(87) Internationale Veröffentlichungsnummer: WO 2015/070837

(56) Entgegenhaltungen:
- DE-A1-102011 001 853
- DE-C- 366 991
- US-A- 2 656 600
- US-A- 5 890 630
- US-A- 5 894 959
- US-A1- 2008 121 658
- US-B1- 8 051 570

## Beschreibung

| | |
|---|---|
| Anmelder: | Börner Distribution International GmbH Industriegebiet Börner 1 54526 Landscheid-Niederkail |
| Bezeichnung: | Verfahren zum Schneiden von Obst, Gemüse oder dergleichen, Schneidwerkzeug |

Die vorliegende Erfindung betrifft ein Verfahren und Schneidwerkzeug zum Schneiden von Obst, Gemüse oder dergleichen, wie beispielsweise aus DE 10 2011 001 853 bekannt. Das Schneidwerkzeug kann insbesondere dazu verwendet werden, ein zuvor beispielhaft genanntes Schneidgut definiert zu zerkleinern.

Zum Schneiden von Nahrungsmitteln werden bekanntermaßen Messer eingesetzt. Hierbei ist es notwendig, dass die eingesetzten Messer eine scharfe Schneide aufweisen, um möglichst kontrolliert auch durch härtere Nahrungsmittel schneiden zu können oder auch um einen sauberen Schnitt zu erhalten, ohne weiche Nahrungsmittel an der Schnittfläche zu zerreißen oder zu zerquetschen. Bei konventionellen Handküchenmessern wird die Schneide jedoch mit der Zeit stumpf, wodurch sich an der Schneide die Reibungswirkung zwischen dem Messer und dem Nahrungsmittel erhöht und sich die Gefahr erhöhen kann, den Schnitt nicht so sauber wie beabsichtigt durchführen zu können.

Weiterhin sind Vorrichtungen bekannt die ein Schneidmesser aufweisen, welches in einem Rahmen festgehalten ist, auf welchen das Nahrungsmittel entlanggeführt wird. Durch das Überfahren des Schneidmessers mit dem Nahrungsmittel, wird dieses in Streifen geschnitten und der abgeschnittene Streifen, wird durch den Rahmen hindurch geleitet und von dem Nahrungsmittel separiert. Üblicherweise weisen derartige Vorrichtungen eine Reibfläche auf, auf der das Nahrungsmittel bis zum Schneidmesser hin und über dieses hinweg unter Beaufschlagung mit einer Andruckkraft geführt wird. Diese Andruckkraft erhöht ebenfalls eine Reibungswirkung zwischen dem Messer und dem Nahrungsmittel.

Es besteht daher der Wunsch nach einer Lösung zum Schneiden von Nahrungsmitteln, welche eine durch eine Schneidbewegung erzeugte Reibungskraft zwischen dem verwendeten Schneidwerkzeug und dem zu zerschneidenden Schneidgut nicht erhöht.

Es ist Ziel der Erfindung eine verbesserte Lösung für ein Verfahren zum Schneiden von Obst, Gemüse oder dergleichen und ein Schneidwerkzeug bereitzustellen, welche zumindest einen Teil der im Stand der Technik bekannten Nachteile vermeiden oder zumindest vermindern.

Die Aufgabe wird erfindungsgemäß gelöst, mittels eines Verfahrens gemäß dem Hauptanspruch, sowie eines Schneidwerkzeugs gemäß einem nebengeordneten Anspruch.

Vorteilhafte Ausgestaltungen, weitere Merkmale und Details der vorliegenden Erfindung ergeben sich aus den abhängigen Ansprüchen, der Beschreibung und der Zeichnung. Dabei gelten Merkmale und Details, die im Zusammenhang mit dem Verfahren beschrieben sind, selbstverständlich auch im Zusammenhang mit der Vorrichtung und jeweils umgekehrt, so dass bezüglich der Offenbarung dieser Erfindung zu den einzelnen Erfindungsaspekten stets wechselseitig Bezug genommen werden kann.

Der Gegenstand des Hauptanspruches betrifft dabei ein Verfahren zum Schneiden von Obst, Gemüse oder dergleichen mittels eines von einer Hand gehaltenen Küchenhobels. Gemäß dem Verfahren wird einer Klinge des Küchenhobels ein Fluid zugeführt.
Durch die erfindungsgemäße Lehre wird der Vorteil erreicht, dass die mit dem Fluid beaufschlagte Klinge eine geringere Reibung gegenüber dem Schneidgut aufweist, da das Fluid selbst einen geringeren Reibwiderstand gegenüber der Oberflächen des Schneidgutes und der Klinge aufweist. Hierbei weisen insbesondere die Seitenfläche der Klinge eine relativ hohe Reibung gegenüber dem Schneidgut auf, wobei das Fluid während einer Schneidbewegung verhindert, dass durch eine immer weiter in das Schneidgut eindringende Klinge die Schneidbewegung abgebremst wird.
Der Gegenstand des ersten nebengeordneten Anspruches betrifft dabei ein Schneidwerkzeug zum Schneiden von Obst, Gemüse oder dergleichen, wobei das Schneidwerkzeug in Form eines Küchenhobels ausgestaltet ist. Das Schneidwerkzeug weist einen Grundkörper auf, wobei an dem Grundkörper eine Klinge angeordnet ist, um Stücke von dem jeweiligen zu zerkleinernden Schneidgut abzuschneiden. Ferner weist das Schneidwerkzeug einen Applikator auf, wobei der Applikator dazu bestimmt ist, der Klinge, insbesondere einer Schneidkante der Klinge, ein Fluid zuzuführen.
Unter einer "Klinge" im Sinne der Erfindung kann allgemein ein ebener bandförmiger Körper verstanden werden, welcher in einer Längsausrichtung eine an einer Seitenkante angeordnete geschliffene Schneide aufweist. Die Klinge kann hierbei bevorzugt aus Metall, Keramik oder anderem Material mit einer hohen Rockwellhärte gefertigt sein. Die Schnittkante der Klinge ist jene spitze Kante der geschliffenen Schneide, wobei diese verschiedene Formen aufweisen kann. Hierbei kann die Schneidkante beispielsweise eine gerade, gekrümmte und/oder gewellte Form aufweisen, um beispielsweise für individuell Zwecke an ein jeweiliges Schneidgut angepasst zu werden. So kann es beispielsweise beabsichtigt sein, dass mittels einer gezackten oder gewellten Klinge ein gewünschtes Schnittmuster auf der Schnittfläche des Schnittguts hervorgerufen wird. Durch die erfindungsgemäße Lehre wird der Vorteil erreicht, dass die mit dem Fluid beaufschlagte Klinge eine geringere Reibung gegenüber dem Schneidgut aufweist, da das Fluid selbst einen geringeren Reibwiderstand gegenüber der Oberflächen des Schneidgutes und der Klinge aufweist. Hierbei weisen insbesondere die Seitenfläche der Klinge eine relativ hohe Reibung gegenüber dem Schneidgut auf, wobei das Fluid während einer Schneidbewegung verhindert, dass durch eine immer weiter in das Schneidgut eindringende Klinge die Schneidbewegung abgebremst wird.

Der Gegenstand einer vorteilhaften Ausführungsform betrifft einen Applikator zur Verwendung in einem erfindungsgemäßen Schneidwerkzeug, wobei der Applikator insbesondere eingerichtet ist, einer Klinge eines Schneidwerkzeugs, insbesondere einer Schneidkante der Klinge, ein Fluid zuzuführen.
So wird der Vorteil erreicht, dass die durch einen Applikator mit dem Fluid beaufschlagte Klinge eine geringere Reibung gegenüber einem mit einem Schneidwerkzeug zu zerschneidenden Schneidgut aufweist, da das Fluid selbst einen geringeren Reibwiderstand gegenüber der Oberflächen des Schneidgutes und der Klinge des Schneidwerkzeugs aufweist. Hierbei weisen insbesondere die Seitenfläche der Klinge eine relativ hohe Reibung gegenüber dem Schneidgut auf, wobei das Fluid während einer Schneidbewegung verhindert, dass durch eine immer weiter in das Schneidgut eindringende Klinge die Schneidbewegung abgebremst wird.

Der Gegenstand einer weiteren vorteilhaften Ausführungsform betrifft dabei eine Dosiereinrichtung, zum Aktivieren und/oder Betätigen eines Applikators, aufweisend einen Gehäusekörper, eine Hebelanordnung und Haltemittel.

Nachfolgend werden exemplarische Ausgestaltungen des Verfahrens erläutert.
Entsprechend einer ersten exemplarischen Ausgestaltung des Verfahrens wird die Schneidkante der Klinge über ihre vollständige Länge mit dem Fluid versorgt.
Diese Ausgestaltung weist den Vorteil auf, dass entlang der Schneidkante der Klinge eine gleichmäßige Reibungsminderung durch das Fluid erzielt werden kann.

Entsprechend einer weiteren exemplarischen Ausgestaltung des Verfahrens wird das Fluid beim Abschneiden eines Teils des Schneidgutes von der Klinge auf die Schnittfläche des abgeschnittenen Teils und/oder des Schneidgutes übertragen, wodurch die Schnittfläche wenigstens teilweise mit dem Fluid beaufschlagt, insbesondere benetzt wird.
Diese Ausgestaltung weist den Vorteil auf, dass sich das Fluid durch das Schneidgut auf einfache Weise über die gesamte Fläche der Klinge verteilen lässt.

Entsprechend einer weiteren exemplarischen Ausgestaltung des Verfahrens ist es vorgesehen, dass das Fluid eine Flüssigkeit zur Aktivierung von Vitaminen im Schnittgut, insbesondere ein Öl, ist oder solches enthält. Ferner kann es ebenso vorgesehen sein, dass das Fluid zum Schneiden von zuckerhaltigem Obst einen Bestandteil enthält, der auf einer Schnittfläche des Obstes verhindert, dass diese Schnittfläche sich beispielsweise nach dem Zerschneiden oxidiert und dadurch bräunlich verfärbt.
Diese Ausgestaltung weist den Vorteil auf, dass beispielsweise beim Schneiden von Gemüse zur Bereitung eines Salates eine Schnittfläche an dem Schnittgut durch das vorbeiziehen an der mit dem Fluid beaufschlagten Klinge mit einem Öl oder dergleichen bestrichen wird. Dies kann beispielsweise dazu führen, dass die Schnittfläche nach dem Abtrennen von dem Öl versiegelt wird und das Schnittgut vor einem Oxidieren oder zu starken Entwässern geschützt wird. Ferner kann beim Schneiden von Fleisch mit einem Schneidwerkzeug in Form eines Küchenmessers, die Klinge durch das aufgetragene Öl in vorteilhafter Weise leichter durch das Fleisch gezogen werden und das Fleisch erhält an den Schnittflächen einen Öl-Auftrag, welcher beispielsweise beim Anbraten einen vorteilhaften Zweck erfüllt.

Entsprechend einer weiteren exemplarischen Ausgestaltung des Verfahrens wird der Klinge des Schneidwerkzeugs ein weiteres Fluid zugeführt. Das weitere Fluid kann mit dem anderen bereits genannten Fluid identisch oder unterschiedlich sein. Diese Ausgestaltung weist den Vorteil auf, dass ebenso eine Möglichkeit geschaffen werden kann, zwei unterschiedliche Fluide, gegebenenfalls aus ebenso zwei getrennten Applikatoren oder einem gemeinsamen Applikator zugeführt werden könne, wobei die unterschiedlichen Fluide eine unterschiedliche Wirkung auf den Schneidevorgang und/oder das Schnittgut aufweisen. Durch die getrennte Bevorratung und/oder die getrennte Zuführung der beiden Fluide kann ein ungewolltes Vermischen der beiden Fluide verhindert werden. Weiterhin kann beispielsweise ebenso sichergestellt werden, dass das eine Fluid vor dem anderen mit dem Schneidgut in Kontakt gerät, insbesondere dann, wenn das eine Fluid im Bereich der Schneidkante zugeführt wird und das andere Fluid in einem in Schneidrichtung dahinterliegenden Bereich der Klinge.

Das Schneidwerkzeug ist
eingerichtet, das zuvor beschriebene erfindungsgemäße Verfahren durchzuführen. Diese Ausgestaltung weist folglich die gleichen Vorteile auf, wie das entsprechend durchgeführte Verfahren.

Das Schneidwerkzeug ist in Form eines Küchenhobels ausgestaltet, wobei der Küchenhobel eine Führungsfläche aufweist, auf der das Schneidgut hin und her bewegt und der Klinge kontrolliert zuführbar ist, wobei die Führungsfläche gegenüber der Klinge versetzt angeordnet ist. Dieser Versatz zwischen der Klinge und der Führungsfläche definiert eine Schneidstärke der zu schneidenden Stücke. Zur Veränderung der Schneidstärke kann es insbesondere vorgesehen sein, dass die Führungsfläche in ihrer Lage relativ zur Klinge veränderbar und/oder über Einstellmittel einstellbar ist. Ein Schneidwerkzeug in Form eines derartigen Küchenhobels kann dazu verwendet werden, Schneidgut, wie beispielsweise Obst, Gemüse und dergleichen, definiert zu zerkleinern. Das Schneidwerkzeug kann zum leichteren Fixieren und sicheren Führen bei einem Schneidevorgang insbesondere einen Griff aufweisen. Dieser Griff ist bevorzugt mit dem Grundkörper des Schneidwerkzeugs verbunden und/oder als ein Teil des Grundkörpers ausgestaltet.
Weiterhin kann es gemäß einer weiteren Ausgestaltung des Schneidwerkzeugs in Form eines Küchenhobels vorgesehen sein, dass die Klinge quer oder schräg zu einer Hauptachse, insbesondere zu einer Längsachse, des Küchenhobels angeordnet ist. Die Klinge kann ebenso einteilig in einer V-Form oder durch eine Anordnung aus zwei in Schneidrichtung V-förmig zulaufenden Klingen ausgebildet sein.
Diese Ausgestaltung weist den Vorteil auf, dass bei einem Schneidevorgang der Küchenhobel, welcher bevorzugt mit einer Hand insbesondere an dem hierzu vorgesehenen Griff gehalten und mit einem dem Griff gegenüberliegenden Ende auf einer Unterlage oder der Kante eines Auffangbehälters für das Schnittgut abgestützt wird, vor einem Verrutschen gesichert gehalten werden kann, wodurch sich, insbesondere bei sehr schnellen Bewegungen des Schneidguts, das Schneidwerkzeug besser kontrollieren lässt und die Gefahr einer Verletzung des Benutzers minimiert wird. Das zu zerkleinernde Schneidgut wird hierbei bevorzugt auf der Führungsfläche hin und her bewegt und der Klinge zugeführt. Bei jeder Bewegung des Schneidguts über die Klinge wird eine Scheibe von dem Schneidgut abgeschnitten und fällt durch einen Schlitz zwischen der Klinge und der Führungsfläche hindurch.

Entsprechend einer exemplarischen Ausgestaltung des Schneidwerkzeugs weist der Grundkörper eine Öffnung auf, durch die hindurch das Fluid zuführbar ist. Die Öffnung ist hierbei insbesondere eine den Grundkörper von oben nach unten durchdringende Leitung mit einer oberen Öffnung, welche in eine entlang der Schneide verlaufenden Rinne leitend mündet. Hierbei ergeben sich mehrere Möglichkeiten zur Anordnung der Öffnung. Ebenso ist es denkbar, dass eine Mehrzahl an Öffnungen zur Zuführung von mehreren Fluiden und/oder zur Zuführung auf sich gegenüberliegenden Seiten der Klinge vorgesehen ist. Demnach kann im Falle einer Zuführung von beispielsweise zwei Fluiden jeweils eine eigene Öffnung für jedes Fluid vorgesehen sein, welche wahlweise nebeneinander auf derselben Seite der Klinge oder aber jeweils auf einer gegenüber liegenden Seite der Klinge angeordnet sein. Insbesondere im Falle von zwei auf einer Seite der Klinge nebeneinander angeordneten Öffnungen, kann es beabsichtigt sein, dass ein Fluid im Bereich der Schneidkante der Klinge aufgetragen wird und das andere Fluid in einem Bereich eines der Schneidkante gegenüberliegenden Klingenrücken. Alternativ kann es ebenso vorgesehen sein, dass eine Öffnung auf jeder der gegenüberliegenden Seiten der Klinge angeordnet ist, durch welche hindurch das gleiche Fluid zugeführt wird.
Diese Ausgestaltung weist den Vorteil auf, dass durch einer der jeweiligen Bestimmung entsprechende Anordnung der Öffnungen zur Zuführung eines Fluides möglich ist, welche eine vorteilhafte Auswirkung auf eine bessere Verteilung des zugeführten Fluides auf der Klinge haben kann und ebenso im Falle von zwei Fluiden bewirken kann, dass ein im Bereich der Schneidkante zugeführtes Fluid aufgrund einer Wirkung auf den Schneidvorgang selbst vorteilhaft sein kann, wohingegen ein weiteres in einem Bereich eines Klingenrücken zugeführten Fluid erst beim Überstreichen der Klinge mit dem Schnittgut in Kontakt gelangt und folglich einem anderen vorteilhaften Zweck dient.

Entsprechend einer weiteren exemplarischen Ausgestaltung des Schneidwerkzeugs ist die Öffnung an einer Oberfläche des Grundkörpers an einem der Klinge benachbarten Abschnitt ausgebildet. Zunächst kann es vorgesehen sein, dass eine Öffnung für ein Fluid an einem Ende der Klinge, bevorzugt dem mit dem Grundkörper in Verbindung stehenden Ende der Klinge, angeordnet ist, und das aus der Öffnung austretende Fluid auf die entsprechende Seite der Klinge gelangt und sich auf diese verteilt und/oder auf dieser verteilt wird.
Diese Ausgestaltung weist den Vorteil auf, dass durch ein kontrolliertes Austreten des Fluides durch die Öffnung die Verteilung des Fluides entlang der Schneidkante und/oder auf einer Seitenfläche der Klinge kontrolliert beeinflusst werden kann.

Entsprechend einer weiteren exemplarischen Ausgestaltung des Schneidwerkzeugs ist die Öffnung bevorzugt an einem Ende der Klinge angeordnet.
Diese Ausgestaltung weist den Vorteil auf, dass insbesondere bei einer schräg zu einer Schneidrichtung angeordneten Klinge das im Bereich eines vorderen Ende der Klinge zugeführten Fluid mit der Schneidbewegung einhergehend entlang der Schneidkante der Klinge mitgezogen und/oder verteilt werden kann.

Entsprechend einer weiteren exemplarischen Ausgestaltung des Schneidwerkzeugs weist der Grundkörper ein Fach auf, wobei der Applikator bevorzugt wenigstens teilweise in das Fach einführbar ist. Um die äußeren Abmessungen des Schneidwerkzeugs in vorteilhafter Weise nicht zu verändern, kann es weiter vorgesehen sein, dass das Fach derart ausgestaltet ist, das der Applikator vollumfänglich in dem Fach aufgenommen ist.
Diese Ausgestaltung weist den Vorteil auf, dass der Applikator eine Verbindung mit dem Grundkörper des Schneidwerkzeugs eingehen kann, welche als eine einfache Steckverbindung mit geringem Aufwand realisierbar ist und keine den Grundkörper in seiner Funktion behindernde Änderungen an diesem erfordern. Hierbei kann es beispielsweise vorgesehen sein, dass der Applikator von einer unteren der Führungsfläche abgewandten Seite her in den Grundkörper, insbesondere in das Fach des Grundkörpers, einbringbar ist.

Entsprechend einer weiteren exemplarischen Ausgestaltung des Schneidwerkzeugs weist der Grundkörper und/oder der Applikator Haltemittel, insbesondere in Form von Rastelementen, auf, wobei die Haltemittel den Applikator, bzw. den Grundkörper wenigstens abschnittsweise ergreifen. Insbesondere kann es vorgesehen sein, dass der Applikator durch ein Anclipsen und/oder Einclipsen mit dem Grundkörper, bevorzugt formschlüssig, verbindbar ist. Hierbei kann es ebenso beabsichtigt sein, dass die Haltemittel an einer äußeren Oberfläche des Grundkörpers angeordnet sind, um den Applikator durch ein Anstecken an den Grundkörper an diesem zu fixieren. Ebenso ist es denkbar, dass die Halteelemente innerhalb eines vorgesehenen Faches angeordnet sind, um den in das Fach eingesteckten Applikator vor einem Herausrutschen zu hindern. Diese Ausgestaltung weist den Vorteil auf, dass auf diese Weise mit relativ geringem Aufwand Mittel bereitgestellt werden können, mit welchen sich eine sichere Verbindung zwischen dem Applikator und dem Grundkörper des Schneidwerkzeugs schaffen lässt, durch welche der Applikator vor einem Verrutschen oder gar einem Herausrutschen aus dem Grundkörper gesichert ist.

Entsprechend einer weiteren exemplarischen Ausgestaltung des Schneidwerkzeugs ist in dem Grundkörper oder in dem Applikator oder in einer dazwischen oder in einer an dem Applikator angeschlossenen Leitung ein Ventil angeordnet, welches einen Volumenstrom des Fluides einstellt.
Ein "Ventil" im Sinne der Erfindung meint dabei vorzugsweise ein Mittel zum Einstellen einer Regelgröße, insbesondere eines Volumenstromes und/oder eines Durchflusses eines Mediums. Mit Einstellen des Volumenstromes ist insbesondere sowohl ein Sperren, als auch ein Drosseln und/oder Begrenzen der Regelgröße beschrieben.
Diese Ausgestaltung weist den Vorteil auf, dass sich mittels des Ventils die Menge an zugeführtem Fluid vorteilhaft eingestellt lässt, um in Abhängigkeit der Schneidegeschwindigkeit einen konstanten Nachschub an Fluid zu gewährleisten.

Entsprechend einer weiteren exemplarischen Ausgestaltung des Schneidwerkzeugs weist das Ventil ein Stellglied auf, welches um eine Achse drehbar gelagert ist.
Ein "Stellglied" im Sinne der Erfindung beschreibt dabei vorzugsweise einen Teil eines Ventils zum Regeln einer Durchflussmenge oder eines Volumenstromes, insbesondere den Teil, welcher einen physischen Einfluss auf jene Regelgröße ausübt. Beispielsweise kann das Stellglied als ein Drehzylinder mit einer teilumfänglichen Nut ausgebildet sein, welcher mittels eines Hebels oder Stellrades rotierbar ist und aufgrund eines sich verändernden Querschnitts der Nut den Leitungsquerschnitt zwischen einer Eintrittsöffnung und einer Austrittsöffnung beeinflussen kann.
Diese Ausgestaltung weist den Vorteil auf, dass, durch die Bereitstellung eines Ventils mit einem um eine Achse drehbaren Stellglied, besonderes Platzsparende Ventile verbaut werden können, welche zudem präzise eingestellt werden können. Zudem ergibt sich der Vorteil, dass sich der Öffnungsquerschnitt des Ventils sehr genau einstellen lässt.

Entsprechend einer weiteren exemplarischen Ausgestaltung des Schneidwerkzeugs ist das Ventil mittels eines Einstellmittels, insbesondere eines Hebels und/oder eines Stellrades, einstellbar. Hierbei kann es insbesondere vorgesehen sein, dass das Einstellmittel von außen her zugänglich mit dem Ventil verbunden ist.
Diese Ausgestaltung weist den Vorteil auf, dass sich das Ventil mittels der Einstellmittel auf einfache Art bedienen lässt. Ebenfalls kann es von Vorteil sein, wenn das Einstellmittel zur Anpassung der Durchflussmenge des Fluides zwischen zwei Schneidevorgängen entsprechend verstellt werden kann.

Entsprechend einer weiteren exemplarischen Ausgestaltung des Schneidwerkzeugs ist das Ventil stufenlos einstellbar.
Diese Ausgestaltung weist den Vorteil auf, dass eine besonders fein angepasste Einstellbarkeit des Ventils ermöglicht wird.

Entsprechend einer weiteren exemplarischen Ausgestaltung des Schneidwerkzeugs weist der Applikator oder der Grundkörper einen das Fluid bevorratenden Beutel auf, insbesondere einen Beutel, welcher zumindest teilweise aus Silikon gefertigt ist.

Diese Ausgestaltung weist den Vorteil auf, dass sich hierdurch abermals das benötigte Volumen zur Bereitstellung des Ventils reduzieren lässt, was insbesondere von Vorteil ist, wenn das Ventil als Teil des Applikators ausgestaltet ist.

Nachfolgend werden exemplarische Ausgestaltungen des Applikators erläutert.

Entsprechend einer ersten exemplarischen Ausgestaltung ist der Applikator als Anbauteil und/oder als auswechselbarer Einsatz ausgestaltet.
Diese Ausgestaltung weist den Vorteil auf, dass der Applikator an eine entsprechende Form des Schneidwerkzeugs anpassbar ist und derart an dem Grundkörper des Schneidwerkzeugs angebracht und/oder in den Grundkörper eingebracht werden kann, dass er den Schneidvorgang, insbesondere eine durchgeführte Schneidbewegung nicht behindert.

Entsprechend einer weiteren exemplarischen Ausgestaltung des Applikators weist der Applikator einen Vorratsbehälter für das Fluid, insbesondere einen Beutel, auf, bevorzugt einen Vorratsbehälter oder Beutel, welcher zumindest teilweise aus Silikon gefertigt ist. Hierbei kann es insbesondere vorgesehen sein, dass dieser Vorratsbehälter austauschbar, beispielsweise in Form einer Kartusche ausgestaltet ist. Darüber hinaus kann es vorteilhaft sein, dass der Applikator eine Druckerzeugungsvorrichtung aufweist, welche beispielsweise in Form einer, von außen auf einen Teil des Vorratsbehälters, insbesondere auf einen kolbenartigen Bodenabschnitt, wirkenden Druckfeder ausgestaltet ist.
Diese Ausgestaltung weist den Vorteil auf, dass sich der Vorratsbehälter beispielsweise in seiner Größe und seines Fassungsvolumens für das Fluid derart anpassen lässt, dass er gegebenenfalls in einem hierzu vorgesehenen Fach des Grundkörpers aufgenommen werden kann und zugleich einen möglichst großen Vorrat an Fluid bereitstellen kann. Ferner weist diese Ausgestaltung den Vorteil auf, dass durch die Verwendung von Silikon oder eines gleichwertigen Kunststoffs insbesondere die geforderte Reinheit in Bezug auf die Lebensmittelhygienevorschriften eingehalten werden können.

Entsprechend einer weiteren exemplarischen Ausgestaltung des Applikators weist eine Dosiereinrichtung und/oder eine Pumpe auf, welche insbesondere im Applikator integral angeordnet ist.
Unter "integral angeordnet" im Sinne der Erfindung kann hierbei allgemein verstanden werden, dass die
Dosiereinrichtung oder die Pumpe innerhalb des beispielsweise als einsetzbares Einbauteil ausgestalteten Applikators angeordnet ist. Anders ausgedrückt, kann die Dosiereinrichtung oder die Pumpe bevorzugt ein auswechselbarer Bestandteil des Applikators sein.
Bei der Pumpe kann es sich hierbei insbesondere um eine von einem Benutzer eigenhändig und/oder um eine elektromechanische Pumpe handeln. Ferner kann hierzu jeder denkbare Mechanismus dienen, um das Fluid aus einem Vorratsbehälter zu der Öffnung zu befördern. Ebenso ist es denkbar, dass der Vorratsbehälter für das Fluid in Form eines Hohlzylinders mit bevorzugt einer einer Austrittsöffnung gegenüberliegenden Kolbenartigen Wandung ausgebildet sein, welche nach dem Prinzip einer Spritze oder eines Zylinderkolbens funktioniert. Ebenso ist eine Lösung denkbar, bei welcher das Fluid in dem Vorratsbehälter einem Druck ausgesetzt ist und lediglich mittels einer Dosiereinrichtung kontrolliert aus dem Vorratsbehälter abgelassen werden kann.
Diese Ausgestaltung weist den Vorteil auf, dass durch eine jeweilige ausgewählte Ausgestaltung des Fördermechanismusses des Applikators, die gewünschte oder benötigte feine Einstellbarkeit beispielsweise des Volumenstromes des Fluides bereitstellen lässt.

Entsprechend einer weiteren exemplarischen Ausgestaltung des Applikators fördert die Pumpe entweder das Fluid oder ein Medium, wobei das Medium bestimmt ist, mit dem Fluid in eine Wirkverbindung zu treten.
Beispielsweise kann es im Falle des Vorratsbehälters in Form eines flexiblen Beutels vorgesehen sein, dass die Pumpe das Fluid unter Erzeugung einer Saugwirkung aus dem Beutel herausbefördert oder aber unter Erzeugung einer Druckwirkung von außen auf den Beutel, mittels eines weiteren fluiden Mediums, beispielsweise Luft, das Fluid aus dem Beutel drückt. Diese Ausgestaltung weist den Vorteil auf, dass eine Regelung der Fördergeschwindigkeit des Fluides durch einfache Mittel, auch in Abhängigkeit eines Fließverhaltens des jeweiligen Fluides, ermöglicht werden kann.

Entsprechend einer weiteren exemplarischen Ausgestaltung des Applikators weist der Applikator eine Zufuhrleitung auf, welche den Vorratsbehälter mit einer Austrittsöffnung für das Fluid verbindet. Hierbei kann es ferner vorgesehen sein, dass der Vorratsbehälter als ein räumlich von dem Applikator getrenntes Behältnis ausgestaltet ist, welcher bevorzugt mittels einer Verbindungsleitung mit dem Applikator verbunden ist.
Zusätzlich kann hierbei eine Anordnung einer elektronisch betriebenen Pumpvorrichtung, beispielsweise in einem Abschnitt der Zufuhrleitung von Vorteil sein. Hierdurch kann beispielsweise das Ventil zusammen mit der Pumpvorrichtung ausgestaltet sein, wodurch sich die Durchflussmenge an Fluid sowohl manuell regeln oder aber auch elektronisch steuern lässt.
Diese Ausgestaltung weist den Vorteil auf, dass sich auch großvolumige Vorratsbehälter einsetzen lassen, welche aufgrund ihres Gewichtes oder ihrer Abmessungen nicht zusammen mit dem Applikator in den Grundkörper eingebracht oder an diesen angesteckt werden können.

Nachfolgend werden exemplarische Ausgestaltungen der Dosiereinrichtung erläutert.

Entsprechend einer ersten exemplarischen Ausgestaltung der Dosiereinrichtung ist die Hebelanordnung dazu eingerichtet, den Applikator zum Betätigen eines Auslassventils des Applikators wenigstens teilweise mit einer Druckkraft zu beaufschlagen.
Hierbei kann der Applikator bevorzugt durch die Druckkraft wenigstens teilweise zusammengeschoben werden, wodurch sich ein Auslassventil, beispielsweise am Kopf des Applikators, betätigen lässt. Insbesondere eignet sich hierzu ein Applikator nach Art einer Verpackung und/oder eines Dispensers gemäß der DE 43 33 627. Die Druckkraft bewirkt hierbei bevorzugt ein geringfügiges Zusammendrücken, insbesondere ein relativ aufeinander zu drücken, des Applikators und des Auslassventils.
Diese Ausgestaltung weist den Vorteil auf, dass sich auf diese Weise eine besonders leichte und feine Dosierung der abgegebenen Menge an Fluid aus dem Applikator durchführen lässt. Ferner wird hierzu aufgrund der Hebelanordnung lediglich einen geringen Kraftaufwand zur Betätigung der Hebelanordnung, gegebenenfalls nur mit ein oder zwei Fingern, in vorteilhafter Weise ermöglicht.

Entsprechend einer weiteren exemplarischen Ausgestaltung der Dosiereinrichtung ist der Gehäusekörper mittels einer Verbindungsleitung mit einer an einem Grundkörper eines Schneidwerkzeugs angeordneten Austrittsöffnung verbindbar. Diese Ausgestaltung weist den Vorteil auf, dass mittels der Dosiereinrichtung ebenfalls Applikatoren mit einem Vorratsbehälter von mehreren hundert Millilitern verwendet werden können, welche von dem Schneidwerkzeug getrennt in der näheren Umgebung des Schneidwerkzeugs abgestellt werden kann.

Entsprechend einer weiteren exemplarischen Ausgestaltung der Dosiereinrichtung ist der Gehäusekörper an einem Grundkörper eines Schneidwerkzeugs befestigbar.
Diese Ausgestaltung weist den Vorteil auf, dass sich das Schneidwerkzeug mit der Dosiereinrichtung zu einer gemeinsamen handlichen Einheit verbinden lässt. Hierdurch gelangt beispielsweise die Hebelanordnung der Dosiereinrichtung in die Reichweite der Hand, insbesondere der Haltehand, des Benutzers des Schneidewerkzeugs und kann auf diese Weise leicht betätigt werden.

Die Erfindung wird nachfolgend eingehender an Hand der Figuren erläutert; in diesen zeigen
Fig. 1 eine schematische Darstellung eines Schneidwerkzeugs,
Fig. 2 eine schematische Darstellung des erfindungsgemäßen Schneidwerkzeugs,
Fig. 3a eine perspektivische Darstellung des erfindungsgemäßen Schneidwerkzeugs mit einer Dosiereinrichtung und einem Applikator,
Fig. 3b eine weitere perspektivische Darstellung des Gegenstandes gemäß Fig. 3a aus einem verschiedenen Blickwinkel,
Fig. 3c eine weitere Darstellung des Gegenstandes gemäß der Figuren 3a und 3b von unten,
Fig. 4a eine perspektivische Darstellung einer möglichen Ausgestaltung einer Dosiereinrichtung und eines Applikators in voneinander getrenntem Zustand,
   und
Fig. 4b die Dosiereinrichtung und der Applikator gemäß Figur 4a in zusammengesetzten Zustand.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Die einzelnen Figuren der Zeichnung dieser Anmeldung sind lediglich als schematisch und als nicht maßstabsgetreu anzusehen.

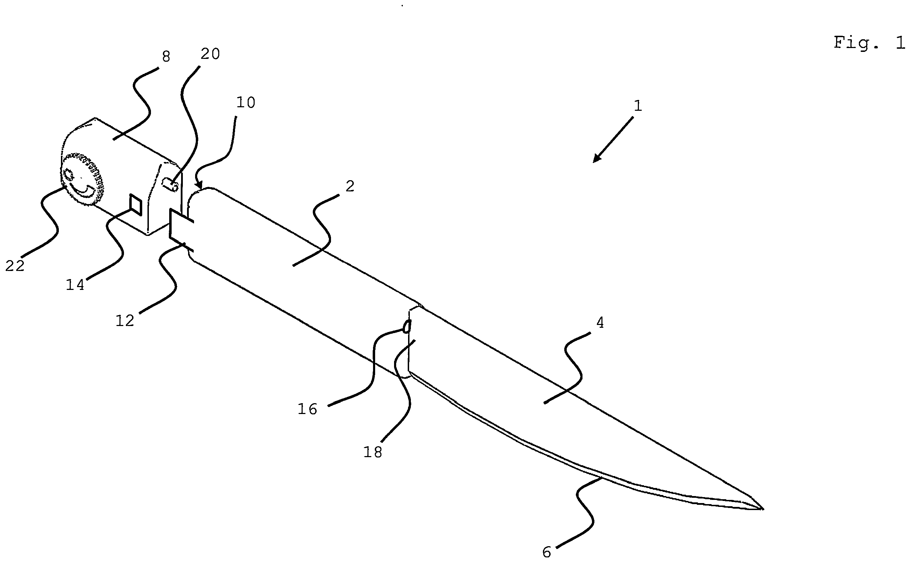

Fig. 1 zeigt eine schematische Darstellung eines Schneidwerkzeugs.

Dabei zeigt Fig. 1 ein Schneidwerkzeug 1 zum Schneiden von Schneidgut in Form eines Küchenmessers. Hierbei weist das Schneidwerkzeug 1 einen Grundkörper 2 mit einer bevorzugt länglichen Ausdehnung auf, welcher als Haltegriff dient. In Verlängerung des Grundkörpers 2 ist eine Klinge 4 angeordnet, welche über eine Schneidkante 6 verfügt, um Stücke von dem Schneidgut abzuschneiden. Das Schneidwerkzeug 1 weist ferner einen Applikator 8 auf, wobei der Applikator 8 dazu eingerichtet ist, der Klinge 4, insbesondere der Schneidkante 6 der Klinge 4, ein Fluid zuzuführen. Wie der Darstellung weiter entnommen werden kann ist der Applikator 8 als Anbauteil ausgestaltet, und wird an dem der Klinge 4 gegenüberliegenden stirnseitigen Ende 10 des Grundkörpers 2 angeordnet. Der Applikator 8 weist ferner zur Zufuhr von Fluid einen aus zeichnungstechnischen Gründen nicht dargestellten Vorratsbehälter für das Fluid auf. Bei der dargestellten Ausgestaltung des Schneidwerkzeuges 1 weist der Applikator 8 an seinem mit dem stirnseitigen Ende 10 des Grundkörpers 2 in Kontakt stehendem Ende eine als Verbindungsstutzen ausgestaltete Austrittsöffnung 20 auf. Durch diese wird das Fluid von den Applikator 8 an das Schneidwerkzeug 1 abgegeben, zur Weiterleitung an die Klinge 4 ist bei der dargestellten Ausgestaltung bevorzugt ein nicht dargestellter Leitungskanal in dem Grundkörper 2 angeordnet, welcher die Austrittsöffnung 20 mit der Öffnung 16 in dem Grundkörper 2 verbinden.

Ferner ist in Fig. 1 gezeigt, dass der Applikator 8 nach einem Anstecken an das stirnseitige Ende 10 des Grundkörpers 2 von Haltemitteln 12, welche mit an dem Applikator 8 vorgesehenen Haltenuten 14 ineinandergreifen, gehalten. Die Haltemittel 12 zusammen mit den Haltenuten 14 sind insbesondere eingerichtet, den Applikator 8 vor einem Abfallen und einem Verkanten an der Kontaktfläche zwischen dem Applikator 8 und dem Grundkörper 2 zu hindern. Der Grundkörper 2 weist ferner eine Öffnung 16 auf, durch die hindurch das Fluid zur Klinge 4 zugeführt wird. Die Öffnung 16 ist an einer Oberfläche des Grundkörpers 2 bevorzugt an einem ein Ende18 der Klinge 4 kontaktierenden Abschnitt ausgebildet.

Darüber hinaus sind an dem Applikator 8 Einstellmittel 22 in Form eines Stellrades dargestellt, mittels welcher ein im Inneren des Applikators 8 angeordnetes nicht dargestelltes Ventil stufenlos einstellbar ist. Das Ventil dient zum Einstellen eines Volumenstromes des Fluides und in Folge dessen auch der Menge an dem der Klinge 4 zugeführtem Fluid.

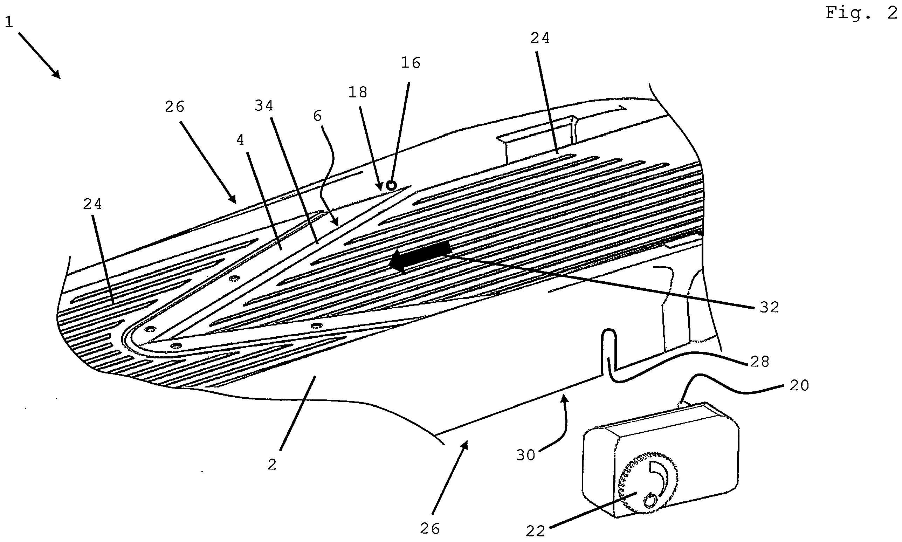

Fig. 2 zeigt eine schematische Darstellung des erfindungsgemäßen Schneidwerkzeugs.

Fig. 2 zeigt hingegen ein Schneidwerkzeug 1 zum Schneiden von Schneidgut in Form eines Küchenhobels. Hierbei weist das Schneidwerkzeug 1 ferner eine Führungsfläche 24 auf, auf der das Schneidgut hin und her bewegt und der Klinge 4 kontrolliert zugeführt wird. Die dargestellte Klinge 4 hat eine entgegen der Schneidrichtung 32 geöffnete V-Form. Es ist jedoch ebenfalls denkbar, dass eine Klinge 4 eine einfache schräg angeordnete Schneidkante 6 aufweist. Wie der Darstellung im Detail weiter entnommen werden kann, ist die Führungsfläche 24 unter Bildung eines Spaltes 34 gegenüber der Klinge 4 versetzt angeordnet. Dieser Spalt 34 definiert die Dicke des von dem Schneidgut abgeschnittenen Stückes. Ferner ist es bei der dargestellten Ausgestaltung vorgesehen, dass der Applikator 8 eine seitlich angeordnete Austrittsöffnung 20 aufweist. Ferner ist es beabsichtigt, dass der Applikator 8 von einer unteren Seite 30 her in ein im Grundkörper 2 vorgesehenes, nichtbeziffertes Fach eingeschoben wird. Hierzu ist im Grundkörper 2, an dessen Längsseite 26 eine Aussparung 28 vorgesehen, welche von oben um eine nicht dargestellte Verbindung des Einstellmittels 22 und des Ventils herumgreift, so dass der Applikator 8 im Inneren des Grundkörpers 2 aufgenommen ist und das Einstellmittel 22 weiterhin von außen her zugänglich ist. Alternativ ist es jedoch ebenso denkbar, dass das Einstellmittel 22 auf der unteren Seite 30 über die Wandung des Grundkörpers 2 an dessen Längsseite 26 herausragt und von der unteren Seite 30 her zugänglich ist.

Wenn der Applikator 8 in den Grundkörper 2 eingesetzt ist, fluchtet die Austrittsöffnung 20 bevorzugt mit dem an der entsprechenden Längsseite 26 vorgesehene Öffnung 16 in dem Grundkörper 2. Hierbei ist bei dem dargestellten Schneidwerkzeug 1 davon auszugehen, dass für die dargestellte Öffnung 16 ein spiegelverkehrt angeordneter Applikator 8 vorgesehen ist, welcher in Fig. 2 nicht dargestellt ist. Ebenso ist eine mit dem dargestellten Applikator 8 kooperierende Öffnung 16 auf der entsprechenden Längsseite 26 des Grundkörpers 2 nicht sichtbar und deshalb nicht dargestellt.
Für den nicht dargestellten Fall des Beutels im Applikator bestehend aus Silikon sei betont, dass eine Pumpe nicht erforderlich ist. Bevorzugt verwendete Silikonbeutel sind mit dem Befüllen gespannt und entspannen sich durch eine Dosierungseinrichtung gesteuert während des Entleerens.

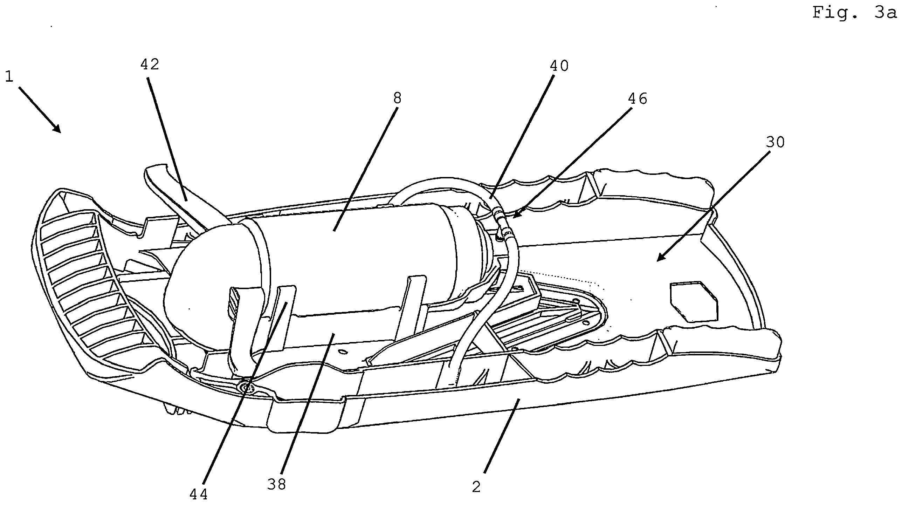

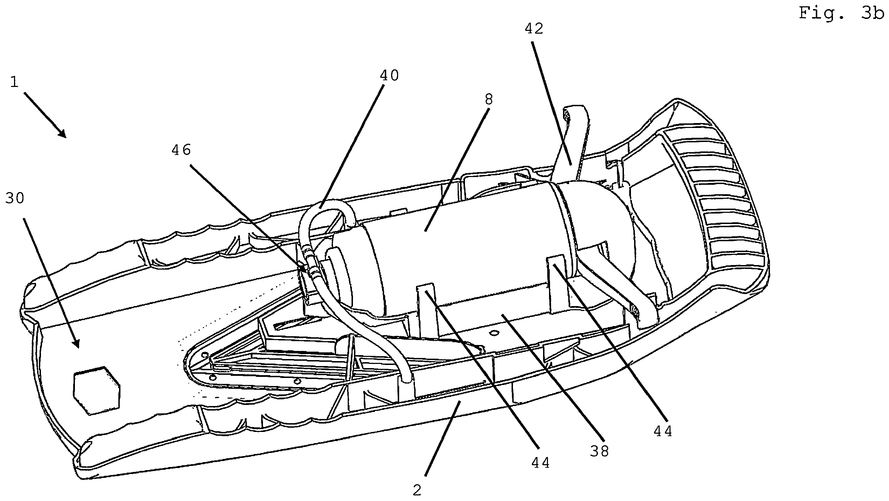

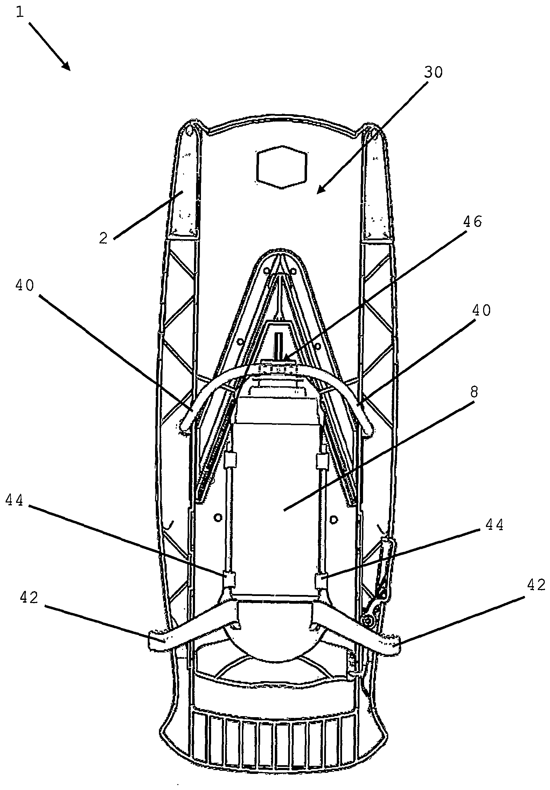

Die Figuren 3a und 3b und 3c zeigen jeweils eine perspektivische Darstellung des Schneidwerkzeugs 1 mit einer Dosiereinrichtung 36 und einem Applikator 8 aus verschiedenen Blickwinkeln.

Das in den Figuren 3a und 3b und 3c gezeigte Schneidwerkzeug 1 ist in Form eines Küchenhobels dargestellt, auf dessen Unterseite eine Dosiereinrichtung 36, zum Aktivieren und/oder Betätigen eines an der Dosiereinrichtung 36 angeordneten Applikators 8, befestigt ist. Die Dosiereinrichtung 36 weist zur Aufnahme des Applikators 8 einen Gehäusekörper 38 auf, an welchem ferner eine Hebelanordnung 42 und Halteelemente 44 angeordnet sind. Die Halteelemente 44 dienen bevorzugt dazu einen eingesetzten Applikator 8 zu halten und von einem unerwünschten Herausrutschen zu sichern. Die Hebelanordnung 42 dient insbesondere zum Betätigen des Applikators, dies bedeutet insbesondere ein Aktivieren und eine Dosieren einer Abgabe an Fluid. Hierzu ist die Hebelanordnung 42 bevorzugt dazu eingerichtet, den Applikator 8 zum Betätigen eines Auslassventils 46 des Applikators 8 wenigstens teilweise mit einer Druckkraft zu beaufschlagen.

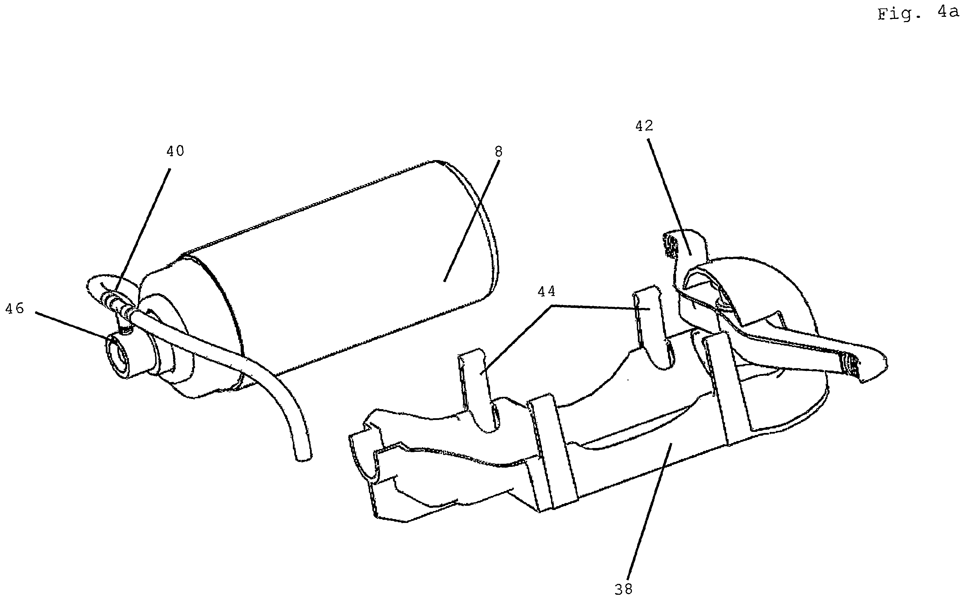

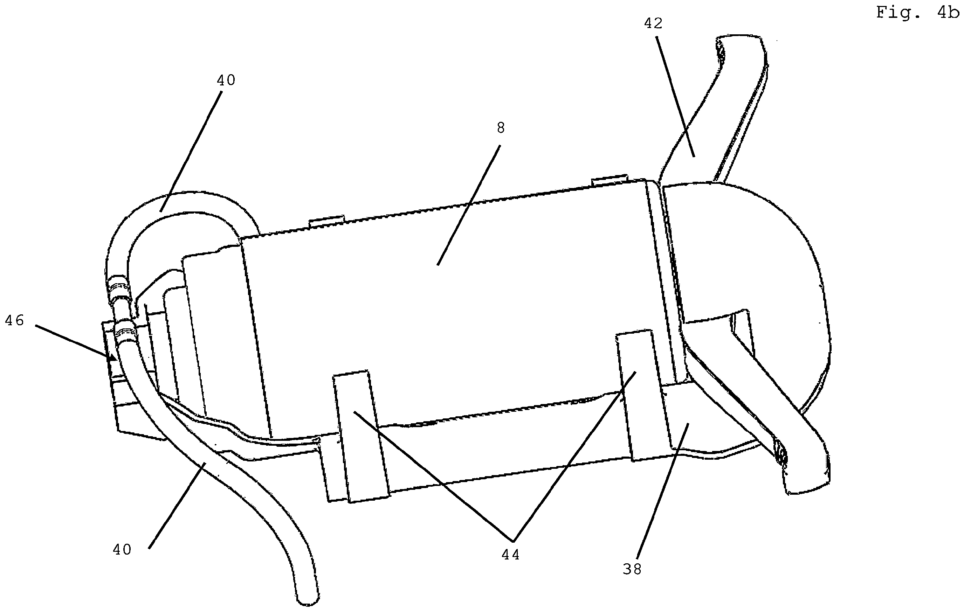

Die Figuren 4a und 4b zeigen eine perspektivische Darstellung einer Dosiereinrichtung 36 und eines Applikators 8, gemäß Fig. 4a in voneinander getrenntem Zustand und gemäß Fig. 4b in zusammengesetztem Zustand.

Die in den Figuren 4a und 4b gezeigte Dosiereinrichtung 36 weist eine Verbindungsleitung 40 auf, mit welcher der Gehäusekörper 38 mit einer an einem Grundkörper 2 eines Schneidwerkzeugs 1 angeordneten Austrittsöffnung 20 verbindbar ist. Ferner ist der Applikator 8 gemäß Figur 4a in die Halteelemente 44 des Gehäusekörpers 38 der Dosiereinrichtung 36 einsteckbar, insbesondere einclipsbar. Die Dosiereinrichtung 36 mit eingesetztem Applikator 8 ist in Figur 4b dargestellt.

Gemäß einem Verfahren zum Schneiden von Obst, Gemüse oder dergleichen wird einer Klinge 4 eines Schneidwerkzeug 1s, bevorzugt einer Schneidkante 6 der Klinge 4 ein Fluid zugeführt. Hierdurch wird der Vorteil erreicht, dass die mit dem Fluid beaufschlagte Klinge 4 eine geringere Reibung gegenüber dem Schneidgut aufweist, da das Fluid selbst einen geringeren Reibwiderstand gegenüber der Oberfläche des Schneidgutes und der Klinge 4 aufweist. Hierbei weisen insbesondere die Seitenfläche der Klinge 4 eine relativ hohe Reibung gegenüber dem Schneidgut auf, wobei das Fluid während einer Schneidbewegung verhindert, dass durch eine immer weiter in das Schneidgut eindringende Klinge 4 die Schneidbewegung abgebremst wird.

Ferner kann es bei dem Verfahren vorgesehen sein, dass die Schneidkante 6 der Klinge 4 über ihre vollständige Länge mit dem Fluid versorgt wird. Dies weist den Vorteil auf, dass entlang der Schneidkante 6 der Klinge 4 eine gleichmäßige Reibungsminderung durch das Fluid erzielt werden kann.

Weiterhin kann es entsprechend vorgesehen sein, dass das Fluid beim Abschneiden eines Teils des Schneidgutes von der Klinge 4 auf die Schnittfläche des abgeschnittenen Teils und/oder des Schneidgutes übertragen wird, wodurch die Schnittfläche wenigstens teilweise mit dem Fluid beaufschlagt, insbesondere benetzt wird. Hierbei wird der Vorteil erreicht, dass sich das Fluid durch das Schneidgut auf einfache Weise über die gesamte Fläche der Klinge 4 verteilen lässt.

Verfahrensgemäß kann es ebenso vorgesehen sein, dass das Fluid eine Flüssigkeit zur Aktivierung von Vitaminen im Schnittgut, insbesondere ein Öl, ist oder solches enthält. Ferner kann es ebenso vorgesehen sein, dass das Fluid zum Schneiden von zuckerhaltigem Obst einen Bestandteil enthält, der auf einer Schnittfläche des Obstes verhindert, dass diese Schnittfläche sich beispielsweise nach dem Zerschneiden oxidiert und dadurch bräunlich verfärbt. Hierdurch wird in vorteilhafter Weise erreicht, dass beispielsweise beim Schneiden von Gemüse zur Bereitung eines Salates eine Schnittfläche an dem Schnittgut durch das vorbeiziehen an der mit dem Fluid beaufschlagten Klinge 4 mit einem Öl oder dergleichen bestrichen wird. Dies kann beispielsweise dazu führen, dass die Schnittfläche nach dem Abtrennen von dem Öl versiegelt wird und das Schnittgut vor einem Oxidieren oder zu starken Entwässern geschützt wird. Ferner kann beim Schneiden von Fleisch mit einem Schneidwerkzeug 1, die Klinge 4 durch das aufgetragene Öl in vorteilhafter Weise leichter durch das Fleisch gezogen werden und das Fleisch erhält an den Schnittflächen einen Öl-Auftrag, welcher beispielsweise beim Anbraten einen vorteilhaften Zweck erfüllt.

Des Weiteren kann es vorgesehen sein, dass der Klinge 4 des Schneidwerkzeug 1 ein weiteres Fluid zugeführt wird. Das weitere Fluid kann mit dem anderen bereits genannten Fluid identisch oder unterschiedlich sein. Hierbei ist es von Vorteil, dass ebenso eine Möglichkeit geschaffen werden kann, zwei unterschiedliche Fluide, gegebenenfalls aus ebenso zwei getrennten Applikatoren 8 oder einem gemeinsamen Applikator 8 zugeführt werden könne, wobei die unterschiedlichen Fluide eine unterschiedliche Wirkung auf den Schneidevorgang und/oder das Schnittgut aufweisen. Durch die getrennte Bevorratung und/oder die getrennte Zuführung der beiden Fluiden kann ein ungewolltes Vermischen der beiden Fluiden verhindert werden. Weiterhin kann beispielsweise ebenso sichergestellt werden, dass das eine Fluid vor dem anderen mit dem Schneidgut in Kontakt gerät, insbesondere dann, wenn das eine Fluid im Bereich der Schneidkante 6 zugeführt wird und das andere Fluid in einem in Schneidrichtung dahinterliegenden Bereich der Klinge 4.

### Bezugszeichenliste:

- 1: Schneidwerkzeug
- 2: Grundkörper
- 4: Klinge
- 6: Schneidkante (der Klinge)
- 8: Applikator
- 10: Stirnseite (des Grundkörpers)
- 12: Haltemittel
- 14: Haltenut
- 16: Öffnung
- 18: Ende (der Klinge)
- 20: Austrittsöffnung
- 22: Einstellmittel
- 24: Führungsfläche
- 26: Längsseite (des Grundkörpers)
- 28: Aussparung
- 30: untere Seite
- 32: Schneidrichtung
- 34: Spalt
- 36: Dosiereinrichtung
- 38: Gehäusekörper
- 40: Verbindungsleitung
- 42: Hebelanordnung
- 44: Halteelemente
- 46: Auslassventil

## Patentansprüche

1. Verfahren zum Schneiden von Obst, Gemüse oder dergleichen mittels eines von einer Hand gehaltenen Küchenhobels, wobei der Küchenhobel eine Führungsfläche (24) aufweist, auf der das Schneidgut mit einer anderen Hand hin und her bewegt wird und dabei einer Klinge (4) kontrolliert zuführbar ist, wobei die Führungsfläche (24) gegenüber der Klinge (4) versetzt angeordnet ist, **dadurch gekennzeichnet, dass** der Klinge (4) des Küchenhobels (1) ein Fluid zugeführt wird.

2. Verfahren gemäß Anspruch 1,
wobei die Schneidkante (6) der Klinge (4) über ihre vollständige Länge mit dem Fluid versorgt wird.

3. Verfahren gemäß einem der Ansprüche 1 oder 2,
wobei das Fluid beim Abschneiden eines Teils des Schneidgutes von der Klinge (4) auf die Schnittfläche des abgeschnittenen Teils und/oder des Schneidgutes übertragen wird, wodurch die Schnittfläche wenigstens teilweise mit dem Fluid beaufschlagt, insbesondere benetzt wird.

4. Verfahren gemäß einem der Ansprüche 1 bis 3,
wobei das Fluid eine Flüssigkeit zur Aktivierung von Vitaminen im Schnittgut, insbesondere ein Öl, ist oder solches enthält.

5. Verfahren gemäß einem der Ansprüche 1 bis 4,
wobei der Klinge (4) des Schneidwerkzeugs (1) ein weiteres Fluid zugeführt wird, wobei das weiter Fluid mit dem anderen Fluid identisch oder unterschiedlich ist.

6. Schneidwerkzeug (1) zum Schneiden von Obst, Gemüse oder dergleichen, wobei das Schneidwerkzeug (1) einen Grundkörper (2) aufweist, wobei an dem Grundkörper (2) eine Klinge (4) angeordnet ist, um Stücke von dem Schneidgut abzuschneiden, wobei das Schneidwerkzeug (1) in Form eines Küchenhobels ausgestaltet ist, wobei das Schneidwerkzeug (1) eine Führungsfläche (24) aufweist, auf der das Schneidgut hin und her bewegt und der Klinge (4) kontrolliert zuführbar ist, wobei die Führungsfläche (24) gegenüber der Klinge (4) versetzt angeordnet ist,
**dadurch gekennzeichnet, dass**
das Schneidwerkzeug (1) ferner einen Applikator (8) aufweist, wobei der Applikator (8) dazu bestimmt ist, der Klinge (4), insbesondere einer Schneidkante (6) der Klinge (4), ein Fluid zuzuführen.

7. Schneidwerkzeug (1) gemäß Anspruch 6,
wobei das Schneidwerkzeug (1) eingerichtet ist, ein Verfahren gemäß einem der Ansprüche 1 bis 4 durchzuführen.

8. Schneidwerkzeug (1) gemäß einem der Ansprüche 6 oder 7,
wobei der Grundkörper (2) eine Öffnung (16) aufweist, durch die hindurch das Fluid zuführbar ist, insbesondere eine den Grundkörper (2) von oben nach unten durchdringende Leitung mit einer oberen Öffnung, welche in eine entlang der Schneide verlaufenden Rinne leitend mündet.

9. Schneidwerkzeug (1) gemäß Anspruch 8,
wobei die Öffnung (16) an einer Oberfläche des Grundkörpers (2) an einem der Klinge (4) benachbarten Abschnitt ausgebildet ist.

10. Schneidwerkzeug (1) gemäß einem der Ansprüche 8 oder 9,
wobei die Öffnung (16) bevorzugt an einem Ende (18) der Klinge (4) angeordnet ist.

11. Schneidwerkzeug (1) gemäß einem der Ansprüche 6 bis 10,
wobei der Grundkörper (2) ein Fach aufweist, wobei der Applikator (8) bevorzugt wenigstens teilweise in das Fach einführbar ist.

12. Schneidwerkzeug (1) gemäß einem der Ansprüche 6 bis 11,
wobei der Grundkörper (2) und/oder der Applikator (8) Haltemittel (12), insbesondere Rastelemente, aufweisen,
wobei die Haltemittel (12) den Applikator (8), bzw. den Grundkörper (2) wenigstens abschnittsweise ergreifen.

## Claims

1. Method for cutting an object comprising fruit, vegetables or the like by use of a hand-held kitchen slicer, wherein the kitchen slicer has a guiding surface (24) on which the object is swayed by another hand and thereby is controllable suppliable to a blade (4), wherein the guiding surface (24) is arranged shiftily opposite the blade (4), **characterized in that** a fluid is supplied to the blade (4) of the kitchen slicer (1).

2. Method according to claim 1,
wherein the cutting edge (6) of the blade (4) is supplied with the fluid over its entire length.

3. Method according to claim 1 or 2,
wherein during the cutting of a portion of the object, the fluid is transferred from the blade (4) to a cut surface of a sliced portion and/or the object being cut, so that the cut surface is at least partly exposed to the fluid and is wetted by it.

4. Method according to claim 1 to 3,
wherein the fluid contains a liquid for the activation of vitamins in a cut material, wherein the fluid comprises an oil or the like.

5. Method according to claim 1 to 4,
wherein a further fluid is supplied to the blade (4) of the cutting tool (1), wherein the further fluid is identical to or different from the other fluid.

6. A cutting tool (1) for the cutting of fruit, vegetables or the like, wherein the cutting tool (1) has a base body (2), wherein a blade (4) is disposed on the base body (2) in order to cut off pieces from an object,
wherein the cutting tool (1) is designed as a kitchen slicer, wherein the cutting tool (1) has a guiding surface (24), on which the object is swayed controllable suppliable to a blade (4), wherein the guiding surface (24) is arranged shiftily opposite the blade (4),
**characterized in that**
the cutting tool (1) has an applicator (8), wherein the applicator (8) is designed to supply a fluid to a cutting edge (6) of the blade (4).

7. A cutting tool (1) according to claim 6,
wherein the cutting tool (1) is designed to carry out a method according to claims 1 to 4.

8. A cutting tool (1) according to claims 6 to 7,
wherein the base body (2) has a top, a bottom, a conduit, and a trough, the base body (2) having an opening (16), through which the fluid can be fed, wherein the conduit penetrates the base body (2) from top to bottom with an upper opening, which empties into the trough running along the cutting edge (6).

9. A cutting tool (1) according to claim 8,
wherein the opening (16) is configured on a surface of the base body (2) at a section adjacent to the blade (4).

10. A cutting tool (1) according to claims 8 or 9,
wherein the opening (16) is disposed at one end of the blade (4).

11. A cutting tool (1) according to claims 6 to 10, wherein the base body (2) has a compartment, wherein the applicator (8) can be introduced at least partly into the compartment.

12. A cutting tool according to claims 6 to 11,
wherein at least one of the base body (2) and/or the applicator (8) have holding means (12), especially latching elements, the holding means configured to engage with at least a section of one of the applicator (8) or the base body (2).

## Revendications

1. Procédé de coupe de fruits, de légumes ou similaires au moyen d'une trancheuse de cuisine à main. La trancheuse de cuisine a une surface de guidage (24) sur laquelle le produit à couper est déplacé en mouvement alternatif avec une main tout en contrôlant le déplacement d'une lame (4). La surface de guidage (24) est agencée de manière décalée par rapport à la lame (4), la particularité étant que la lame (4) de la trancheuse de cuisine (1) est alimentée en fluide.

2. Procédé selon la revendication 1,
dans laquelle le tranchant (6) de la lame (4) est alimenté en fluide sur toute sa longueur.

3. Procédé selon une des revendications 1 ou 2,
où le fluide est transféré lors de la coupe d'une partie du produit à couper par la lame (4) sur la surface de coupe de la partie coupée et/ou de l'aliment à couper, la surface de coupe étant au moins partiellement appliquée sur le fluide, notamment mouillée.

4. Procédé selon une des revendications 1 à 3,
dans lequel le fluide est ou contient un liquide d'activation des vitamines dans l'aliment à couper, notamment une huile.

5. Procédé selon une des revendications 1 à 4,
dans lequel la lame (4) de l'outil de coupe (1) est alimentée par un autre fluide, dans lequel le fluide est identique ou différent de l'autre fluide.

6. Outil de coupe (1) pour découper les fruits, légumes ou similaires, l'outil de coupe (1) présente un corps de base (2), une lame (4) étant disposée sur le corps de base (2) pour couper des morceaux de l'aliment à couper, l'outil de coupe (1) étant conçu sous la forme d'une trancheuse de cuisine. L'outil de coupe (1) présente une surface de guidage (24) sur laquelle le produit à couper est déplacé en mouvement alternatif avec une main tout en contrôlant le déplacement d'une lame (4). La surface de guidage (24) est agencée de manière décalée par rapport à la lame (4),
la particularité étant que
l'outil de coupe (1) comprend en outre un applicateur (8), l'applicateur (8) étant destiné à alimenter la lame (4), en particulier un tranchant (6) de la lame (4), avec un fluide.

7. Outil de coupe (1) selon la revendication 6,
dans lequel l'outil de coupe (1) est adapté pour exécuter un procédé selon l'une des revendications 1 à 4.

8. Outil de coupe (1) selon une des revendications 6 ou 7,
dans lequel le corps de base (2) présente une ouverture (16) à travers laquelle le fluide peut être amené, en particulier un corps de base (2) pénétrant de haut en bas avec une ouverture supérieure qui débouche dans un passage le long du bord tranchant du canal.

9. Outil de coupe (1) selon la revendication 8,
dans lequel l'ouverture (16) est constituée sur une surface du corps de base (2) sur l'une des parties adjacentes à la lame (4).

10. Outil de coupe (1) selon une des revendications 8 ou 9,
dans lequel l'ouverture (16) est de préférence agencée à une extrémité (18) de la lame (4).

11. Outil de coupe (1) selon une des revendications 6 à 10,
dans lequel le corps de base (2) présente un compartiment, dans lequel l'applicateur (8) peut de préférence être inséré au moins partiellement dans le compartiment.

12. Outil de coupe (1) selon une des revendications 1 à 11,
dans lequel le corps de base (2) et/ou l'applicateur (8) les moyens de maintien (12) présentent en particulier des éléments de verrouillage, où les moyens de maintien (12) saisissent au moins partiellement l'applicateur (8) ou le corps de base (2).
